# EUROPEAN PATENT APPLICATION

(11) **EP 4 703 819 A1**
(43) Date of publication of application: **04.03.2026**
(21) Application number: 24796720.1
(22) Date of filing: 03.04.2024
(51) Int. Cl.: G05B 19/05, G01D 9/00

(54) **CONTROL DEVICE AND PROGRAM**

(30) Priority: 27.04.2023 JP 2023073533
(71) Applicant: OMRON Corporation, Kyoto-shi, Kyoto 600-8530 (JP)
(72) Inventor: OTA, Masanori, Kyoto-shi, Kyoto 600-8530 (JP); TAMASHIMA, Daisuke, Kyoto-shi, Kyoto 600-8530 (JP); SHIGEMORI, Yutsuka, Kyoto-shi, Kyoto 600-8530 (JP)
(74) Representative: Mewburn Ellis LLP
(86) International application number: PCT/JP2024/013743
(87) International publication number: WO 2024/224962

(57) **Abstract**

A control device includes: a processing unit configured to execute a control computation cyclically with a predetermined execution cycle, the control computation including collecting input data from a field device, calculating output data based on the input data in accordance with a predetermined user program, and outputting the calculated output data; a database configured to store, in a time-series order, designated data among data managed by the processing unit; and a data writing means configured to write data in the database with the same cycle as the execution cycle with which the control computation is executed cyclically. The data writing means includes: a means configured to construct a reference record of the designated data; and a means configured to construct a differential record of the designated data when a predetermined condition is satisfied.

## Description

### TECHNICAL FIELD

The present disclosure relates to a control device including a database to store data in a time-series order, and a program for implementing the control device.

### BACKGROUND ART

In various production sites, FA (factory automation) technology using a control device such as PLC (programmable controller) is widely used. There is a need for ex-post analysis of data handled by such a control device.

In particular, with the advance of ICT (Information and Communication Technology), it is becoming possible for the control device to also collect and store a large amount of data.

Even when a configuration for collecting a large amount of data with a database contained in the control device as described above is adopted, there is still a need for a system that facilitates ex-post analysis or detailed analysis.

Regarding this, Japanese Patent Laying-Open No. 2018-151726 (PTL 1) discloses a control device capable of storing data in accordance with an execution cycle with which a control computation is executed.

### CITATION LIST

### PATENT LITERATURE

PTL 1: Japanese Patent Laying-Open No. 2018-151726

### SUMMARY OF INVENTION

### TECHNICAL PROBLEM

Meanwhile, it is necessary to store data more efficiently for storing data in accordance with the execution cycle of the control computation.

The present disclosure is made for solving the problems as described above, and an object of the present disclosure is to provide a control device and a program that enable data to be stored more efficiently.

### SOLUTION TO PROBLEM

A control device according to an example of the present disclosure includes: a processing unit configured to execute a control computation cyclically with a predetermined execution cycle, the control computation including: collecting input data from a field device; calculating output data based on the input data in accordance with a predetermined user program; and outputting the calculated output data; a database configured to store, in a time-series order, designated data among data managed by the processing unit; and a data writing means configured to write data in the database with the same cycle as the execution cycle with which the control computation is executed cyclically. The data writing means includes: a means configured to construct a reference record of the designated data; and a means configured to construct a differential record of the designated data when a predetermined condition is satisfied.

The means configured to construct a reference record is configured to construct a reference record of the designated data for each first timing, and the means configured to construct a differential record is configured to construct a differential record of the designated data for each second timing different from the first timing, when the predetermined condition is satisfied.

The means configured to construct a differential record is configured to construct a differential record of the designated data when the predetermined condition: there is a difference based on a comparison between the designated data at a preceding time and the designated data at a current time, is satisfied.

The control device is connected to a field device synchronized in time with the control device, and data stored in the database is assigned with time information on a time at which the data is collected by the field device.

A Key-Value store type record in which time information is a Key and a value of corresponding data and quality information of the data are a Value, is stored in the database.

The control device further includes a reproduction means configured to reproduce time-series data stored in the database and, when reproducing the time-series data, the reproduction means is configured to reconstruct, based on the reference record, the differential record of corresponding data stored in the database, and output the reconstructed differential record.

A program for implementing a control device according to an example of the present disclosure is provided, the program causes a computer to perform executing a control computation cyclically with a predetermined execution cycle, the control computation including: collecting input data from a field device; calculating output data based on the input data in accordance with a predetermined user program; and outputting the calculated output data, the computer includes a database configured to store, in a time-series order, designated data among data managed by the control computation, the program causes the computer to perform writing data in the database with the same cycle as the execution cycle with which the control computation is executed cyclically, and the writing the data includes: constructing a reference record of the designated data; and constructing a differential record of the designated data when a predetermined condition is satisfied.

### ADVANTAGEOUS EFFECTS OF INVENTION

The control device and the program of the present disclosure enable data to be stored more efficiently.

### BRIEF DESCRIPTION OF DRAWINGS

Fig. 1 is a schematic diagram showing an overall configuration example of a control system 1 according to the present embodiment.
Fig. 2 is a block diagram showing a hardware configuration example of a control device 100 serving as a component of control system 1 according to the present embodiment.
Fig. 3 is a block diagram showing a software configuration example of control device 100 serving as a component of control system 1 according to the present embodiment.
Fig. 4 is a schematic diagram schematically illustrating a data structure of a time-series database 180 implemented in control device 100 according to the present embodiment.
Fig. 5 is a schematic diagram for illustrating cyclic execution and an operation of writing in the time-series database in control device 100 according to the present embodiment.
Fig. 6 is a diagram illustrating specific examples of data stored in time-series database 180 according to an embodiment and a comparative example.
Fig. 7 is a flowchart illustrating processing of a data writing program according to an embodiment.
Fig. 8 is a diagram illustrating a reproduction operation in accordance with data in the time-series database based on an embodiment.

### DESCRIPTION OF EMBODIMENTS

Embodiments of the present invention are described in detail with reference to the drawings. In the drawings, the same or corresponding parts are denoted by the same reference characters, and a description thereof is not herein repeated.

### <A. Overall Configuration Example of Control System>

Initially, an overall configuration example of a control system 1 including a control device according to the present embodiment is described.

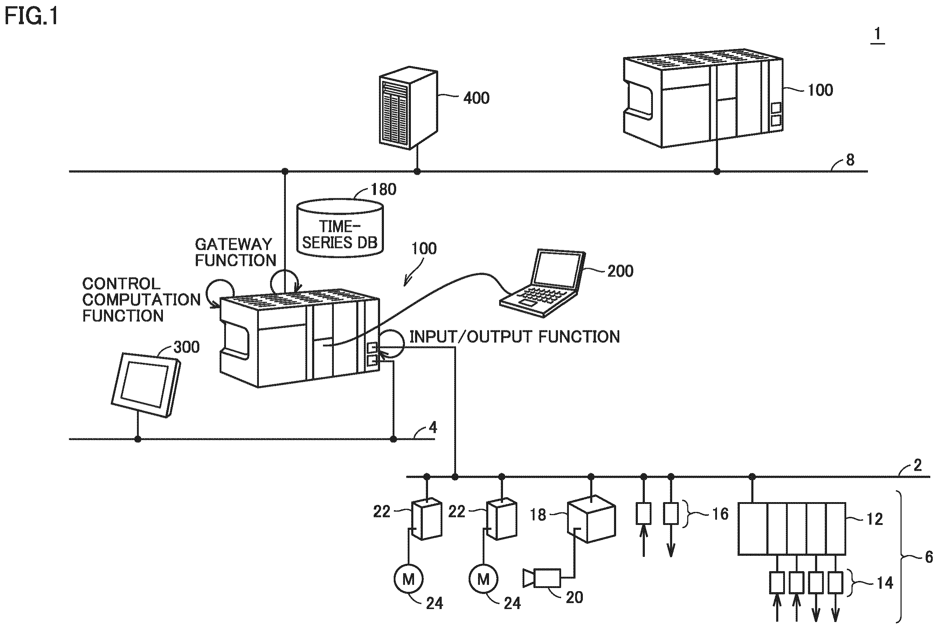

Fig. 1 is a schematic diagram showing an overall configuration example of control system 1 according to the present embodiment. Referring to Fig. 1, control system 1 according to the present embodiment includes, as main components, a control device 100 that controls a control target, and a support device 200 that is connected to control device 100.

Control device 100 may be embodied as a kind of computer such as PLC (Programmable Controller). Control device 100 is connected to a field device group 6 through a first field bus 2, and is also connected to one or more display devices 300 through a second field bus 4. Control device 100 communicates data with connected devices through respective buses or a network.

Control device 100 has a control computation function of executing various computations for controlling a manufacturing device and/or facilities. Control device 100 has, in addition to the control computation function, an input/output function of acquiring data measured by field device group 6 and transferred to control device 100 (the data is also referred to as "input data" hereinafter) and various data calculated by the control computation function, as well as a time-series database 180. In the following, "database" is also referred to as "DB." Time-series database 180 stores, in a time-series order, various data acquired by the input/output function, as described later herein.

As first field bus 2 and second field bus 4, a bus or a network for performing periodic communication ensuring the data arrival time is preferably adopted. As a bus or a network for performing such periodic communication, EtherCAT (registered trademark), EtherNet/IP (registered trademark), DeviceNet (registered trademark), CompoNet (registered trademark), and the like are known.

Field device group 6 includes a device that collects input data from a manufacturing device, a production line, or the like (also referred to collectively as "field") associated with a control target or control. Such a device for collecting input data may be an input relay, various sensors (for example, such as an analog sensor, a temperature sensor, and a vibration sensor), or the like. Field device group 6 further includes a device that gives a certain action to the field based on a command (hereinafter also referred to as "output data") generated by control device 100. Examples of such a device that gives a certain action to the field may include an output relay, a contactor, a servo driver and a servo motor, and any other actuators.

Thus, the control computation function of control device 100 acquires input data from a control target, and determines output data for the control target by executing the control computation based on the acquired input data.

Field device group 6 communicates data including input data and output data with control device 100 through first field bus 2. In the configuration example shown in Fig. 1, field device group 6 includes a remote I/O (Input/Output) device 12, a relay group 14, an image sensor 18 and a camera 20, and a servo driver 22 and a servo motor 24. Field device group 6 is not limited to them, and any device may be adopted as long as it can collect input data or can perform a certain action based on output data.

Remote I/O device 12 includes a communication unit that performs communication through first field bus 2, and an input/output unit (hereinafter also referred to as "I/O unit") that acquires input data and outputs output data. Input data and output data are communicated between control device 100 and the field through such an I/O unit. Fig. 1 shows an example in which digital signals are communicated as input data and output data through relay group 14.

The I/O unit may be directly connected to a field bus or a field network. Fig. 1 shows an example in which I/O unit 16 is directly connected to first field bus 2.

Image sensor 18 performs an image measurement operation such as pattern matching on image data captured by camera 20, and outputs the result of the operation to control device 100.

Servo driver 22 drives servo motor 24 in accordance with output data (for example, a position command, a speed command, or the like) from control device 100.

As described above, data is communicated between control device 100 and field device group 6 through first field bus 2, and the communicated data is updated with an extremely short cycle on the order of several hundreds of µsec to several tens of msec. Such an update operation for the communicated data may also be referred to as "I/O refresh operation."

Display device 300 connected to control device 100 through second field bus 4 receives operation from a user, outputs a command or the like in accordance with the user operation to control device 100, and graphically displays the result of computation for example by control device 100.

Support device 200 is a device that supports preparation necessary for control device 100 to control a control target. Specifically, support device 200 provides a development environment (a program generating and editing tool, a parser, a compiler, and the like) for a program executed by control device 100, a setting environment for setting parameters (configurations) for control device 100 and various devices connected to control device 100, a function of outputting a generated user program to control device 100, and a function of modifying or changing the user program or the like executed on control device 100 online, for example.

Control device 100 further has a gateway function of outputting, to an external device, data acquired by the input/output function and/or data stored in time-series database 180.

Fig. 1 shows, as a typical example of the external device, a host system 400 such as manufacturing execution system connected to control device 100 through a host-controller communication network 8. The manufacturing execution system acquires information from a manufacturing device or facilities to be controlled, monitors and manages the entire production, and can also handle order information, quality information, delivery information, and the like.

### <B. Hardware Configuration Example of Control Device>

Next, a description is given of a hardware configuration example of control device 100 serving as a component of control system 1 according to the present embodiment.

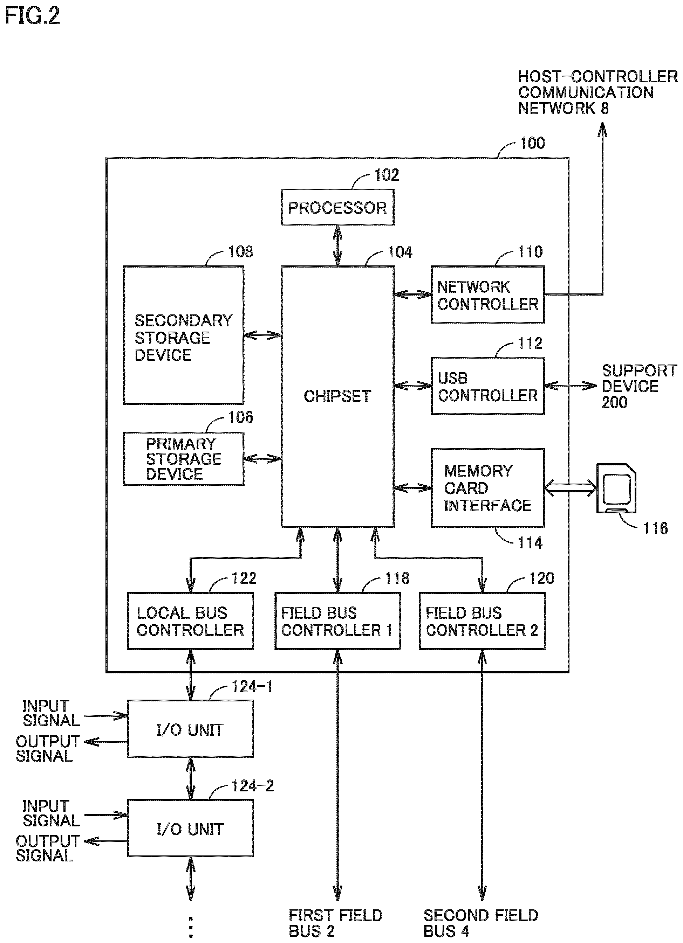

Fig. 2 is a block diagram showing the hardware configuration example of control device 100 serving as a component of control system 1 according to the present embodiment. Referring to Fig. 2, control device 100 includes an arithmetic processing unit and one or more I/O units 124-1, 124-2, ....

Control device 100 includes a processor 102, a chipset 104, a primary storage device 106, a secondary storage device 108, a network controller 110, a USB (Universal Serial Bus) controller 112, a memory card interface 114, a local bus controller 122, and field bus controllers 118 and 120.

Processor 102 is configured as a CPU (Central Processing Unit), an MPU (Micro-Processing Unit), or the like, reads various programs stored in secondary storage device 108, deploys the programs in primary storage device 106, and executes the programs, to thereby implement control appropriate for a control target and implement various operations as described later herein. Chipset 104 controls processor 102 and each device to thereby implement operations of control device 100 as a whole.

Secondary storage device 108 stores, in addition to a system program for implementing basic functions, a user program prepared as appropriate for a manufacturing device and/or facilities to be controlled. Further, time-series database 180 as described later herein is configured by using secondary storage device 108, for example.

Network controller 110 communicates data with host system 400 (see Fig. 1) for example through host-controller communication network 8. USB controller 112 controls data communication with support device 200 through USB connection.

Memory card interface 114 is configured to allow a memory card 116 to be attached to and detached from the memory card interface, and is capable of writing data in memory card 116 and reading various data from memory card 116. It is also possible to configure time-series database 180 as described later herein by using memory card 116.

Local bus controller 122 is an interface for communicating data with I/O units 124-1, 124-2, ... mounted on control device 100.

Field bus controller 118 controls data communication with field device group 6 for example through first field bus 2. Similarly, field bus controller 120 communicates data with display device 300 for example through second field bus 4.

While Fig. 2 shows the configuration example where necessary functions are provided through execution of programs by processor 102, some or all of these provided functions may be implemented using a dedicated hardware circuit (for example, ASIC (Application Specific Integrated Circuit) or FPGA (Field-Programmable Gate Array) or the like). Alternatively, the main part of control device 100 may be implemented by using hardware conforming to a general-purpose architecture (for example, industrial personal computer based on a general-purpose personal computer). In this case, a plurality of OSs (Operating Systems) having different uses may be executed in parallel using the virtualization technology, and necessary applications may be executed on each OS.

### <C. Software Configuration Example of Control Device>

Next, a description is given of a software configuration example of control device 100 serving as a component of control system 1 according to the present embodiment.

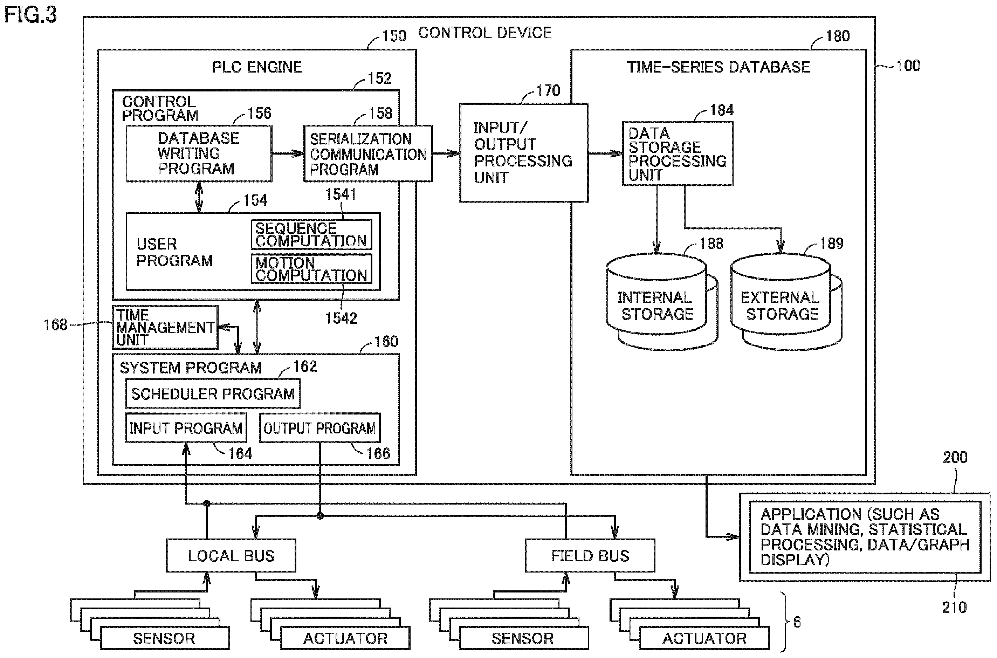

Fig. 3 is a block diagram showing the software configuration example of control device 100 serving as a component of control system 1 according to the present embodiment. Referring to Fig. 3, control device 100 includes a PLC engine 150, an input/output processing unit 170, and time-series database 180.

PLC engine 150 typically corresponds to a processing unit capable of executing various programs under an execution environment for various programs provided through execution of a system program by processor 102 of control device 100. More specifically, PLC engine 150 includes a control program 152, a system program 160, and a time management unit 168.

Control program 152 is a program for providing various applications appropriate for a control target, and typically includes a user program 154, a database writing program 156, and a serialization communication program 158.

User program 154 corresponds to a main part that provides the control computation function, and can be configured in any manner as appropriate for a manufacturing device and/or facilities for example to be controlled by control device 100. User program 154 can be defined by a ladder logic or the like using a function block or the like. In the example shown in Fig. 3, user program 154 includes a sequence computation 1541 and a motion computation 1542. In motion computation 1542, an output value to an actuator is generated by referring to input data from a sensor or an actuator for example as well as instructions included in user program 154.

Thus, user program 154 refers to a state value in control device 100 including an observation value updated by an input program 164, and updates the state value in control device 100 to be provided as an output. The updated state value may be referred to by other functions executed in control device 100, such as an output program 166 and database writing program 156. Generally, user program 154 is prepared by a user (device developer, for example) of control device 100 using a programming tool.

Database writing program 156 is called by an instruction defined in user program 154, and writes designated data in time-series database 180 through input/output processing unit 170. Database writing program 156 may be executed as a high priority program.

More specifically, database writing program 156 collects data and requests time-series database 180 to store the data. Database writing program 156 can be executed in synchronization with user program 154. Database writing program 156 can assign time information to the data synchronized between devices by time management unit 168. A specific example of the time information may be the time at which a sensor that is an input source of data inputs data. Database writing program 156 may additionally have various kinds of operations, such as processing of collected data such as unit conversion, and derivation of some kind of information from a plurality of pieces of data. Database writing program 156 can request time-series database 180 to store data to be processed, in a similar manner to that for the collected data. Database writing program 156 can be prepared by a similar tool to that for user program 154. Alternatively, it may be prepared as a part of user program 154. Another tool may be used to prepare database writing program 156 independent of user program 154.

Serialization communication program 158 performs a serialization operation on data to be written from database writing program 156 to time-series database 180. More specifically, serialization communication program 158 executes an operation (serialization) of converting time-series data into a byte sequence that can be stored. Serialization communication program 158 converts a data group requested by database writing program 156 to be stored in time-series database 180, into a format suitable for storage in and reference to the database. It is not always necessary to perform the serialization operation, depending on the speed of writing data in time-series database 180 and the data capacity, for example. That is, serialization communication program 158 is an optional configuration.

System program 160 includes a scheduler program 162, an input program 164, and an output program 166.

Scheduler program 162 performs scheduling for each of programs executed by control device 100, based on execution conditions. That is, scheduler program 162 manages the execution order and the execution timing of one or a plurality of tasks or processes constituting control program 152. Input program 164 provides a function of acquiring input data (for example, a sensor observation value, a state value of a device, and the like) from various devices (field device group 6) connected to control device 100 through a local bus or a field bus. Output program 166 outputs a command value (output data) calculated by user program 154 executed in control device 100, to a target device (field device group 6) connected through a local bus or a field bus.

Time management unit 168 is a component that manages the synchronization timing in control device 100, and is implemented by using a counter or a timer that counts up or counts down with a predetermined cycle, for example. Time management unit 168 may have a function of synchronizing with other counters or timers and, in this case, it can synchronize with counters or timers located on a device on a local bus, on a field bus, or on a field network. Time management unit 168 shares the time with other network-connected devices with high accuracy (for example, on the order of microseconds) in addition to devices on the local bus, on the field bus, or on the field network. This time is a reference for the execution timing of input/output of a sensor/actuator or the program execution timing in control device 100.

Input/output processing unit 170 processes a request to write data in time-series database 180, from PLC engine 150. Input/output processing unit 170 receives and accumulates data write requests from database writing program 156 to time-series database 180, and sequentially stores them in time-series database 180. It operates so as not to affect processing executed with a control cycle by system program 160 and control program 152.

One example of the control cycle may be the one where database writing program 156 is executed for each control cycle to sequentially store time-series data in time-series database 180. Further, it is also possible to flexibly adapt to data supply to other databases and/or applications and reception of input from applications other than the control program. Detailed processing by input/output processing unit 170 is described later herein.

Time-series database 180 is typically placed in primary storage device 106 or secondary storage device 108 (see Fig. 2), and stores time-series data. Time-series database 180 stores time-series data written by database writing program 156.

More specifically, time-series database 180 includes a data storage processing unit 184, an internal storage 188, and an external storage 189.

Data storage processing unit 184 adds input time-series data to a specified record in internal storage 188 or external storage 189, in accordance with a request to write the data in the database through input/output processing unit 170. Data storage processing unit 184 can also use a plurality of storages as storages in which time-series data is to be stored, depending on the use. Data storage processing unit 184 can also set a ring operation of keeping the data amount (storage usage) of the database at a certain value or less by deleting old data. Data storage processing unit 184 is also capable of writing in the database in such a manner that does not damage the database when control device 100 is powered off.

Internal storage 188 is a data storage unit for which secondary storage device 108 (Fig. 2) for example included in control device 100 is used. Internal storage 188 may include a nonvolatile memory such as flash memory, in addition to a volatile memory such as DRAM (Dynamic Random Access Memory) or SRAM (Statistic Random Access Memory). External storage 189 is a nonvolatile data storage unit for which memory card 116 (Fig. 2) or an external hard disk (not shown), for example, is used.

Also in support device 200 connected to control device 100, any application 210 may be executed. An example of application 210 may be a program that utilizes time-series data stored in time-series database 180. For example, it may be so-called data mining for analyzing time-series data stored in time-series database 180 of control device 100 to find a certain tendency or a feature amount associated with the tendency. Alternatively, it may be an application for performing various types of statistical processing on time-series data stored in time-series database 180, or an application for displaying numerical values of time-series data stored in time-series database 180, or displaying a graph or the like that visually indicates the numerical values.

### <D. Time-series Database>

Next, a data structure of time-series database 180 implemented in control device 100 according to the present embodiment is described.

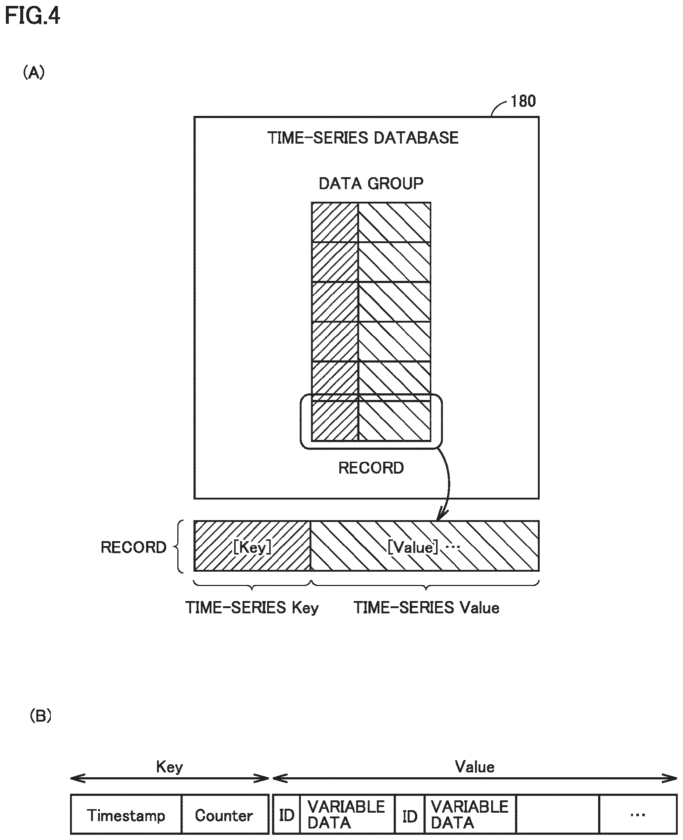

Fig. 4 is a schematic diagram schematically illustrating the data structure of time-series database 180 implemented in control device 100 according to the present embodiment. Referring to Fig. 4 (A), the concept of time-series data handled by time-series database 180 is also referred to as "time series." One time series may be composed of multiple levels of databases.

In time-series database 180, a plurality of time series can be generated, and a time series may be generated for each application, for example. Each database file may have its own attribute such as version.

Time-series database 180 stores a data group. In the data group, time-series data may be stored in the form of records, where a record is the minimum unit of data. The Key-Value store type may be adopted for each record. In the case where the Key-Value store type record is adopted, data to be stored (Value) and a unique marker (Key) corresponding to the data are stored in association with each other. That is, each record includes a Key and a Value of the Key-Value store type.

More specifically, in each record, a time-series Key representing a marker of time-series data, and a time-series Value representing a value of the time-series data may be stored.

Referring to Fig. 4 (B), in the time-series Key, time information (Timestamp) and information indicating a timing (Counter) may be stored, for example. In the time-series Value, respective values (real values) of corresponding input data, output data, and computation data may be stored. In this example, a case is illustrated where an ID of variable data and an associated real value are stored, by way of example.
The length of the time-series Value is not constant but may be set variable, as described later herein.

### <E. Time-series Data Storage Operation>

Next, a time-series data storage operation in control device 100 according to the present embodiment is described. In control device 100, an I/O refresh operation is repeatedly executed every predetermined cycle. At least a part of user program 154 is executed with the same cycle as that of the I/O refresh operation. In the present embodiment, writing of time-series data in time-series database 180 is executed by database writing program 156, and database writing program 156 is called by user program 154.

In control device 100 according to the present embodiment, an on-the-fly input/output operation provided by input/output processing unit 170 enables time-series data to be written in time-series database 180 without hindering repetitive execution (cyclic execution) of a series of programs including the I/O refresh operation.

Time-series database 180 may be configured to enable a plurality of pieces of time-series data independent of each other to be stored therein. Depending on the size of time-series database 180, one or more storages may be utilized. Further, in addition to a function of storing successive and normal time-series data in time-series database 180, a ring function of removing past time-series data to reduce the storage usage amount to a certain amount may be added.

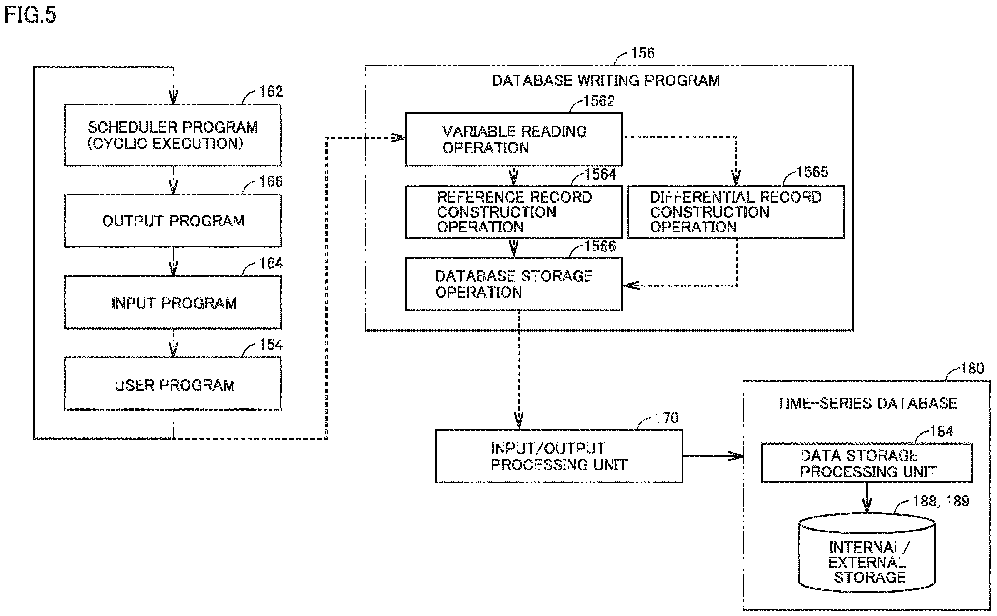

Fig. 5 is a schematic diagram for illustrating cyclic execution and an operation of writing in the time-series database in control device 100 according to the present embodiment. Fig. 5 shows an example where output program 166, input program 164, and user program 154 are cyclically executed, by way of example. An execution cycle (the interval between execution start timings) of the cyclic execution shown in Fig. 5 may also be referred to as "control cycle."

Database writing program 156 called by user program 154 is executed. Database writing program 156 includes a variable reading operation 1562, a reference record construction operation 1564, a differential record construction operation 1565, and a database storage operation 1566.

A control computation executed cyclically with a predetermined execution cycle as shown in Fig. 5 includes: collecting input data from a field device (input program 164); calculating output data based on the input data in accordance with predetermined user program 154; and outputting the calculated output data (output program 166).

As shown in Fig. 5, as database writing program 156 is called by user program 154, database writing program 156 is executed in synchronization with the control cycle. At this time, user program 154 requests database writing program 156 to write data. That is, the cyclically executed control computation includes an operation of issuing a request to write data to database writing program 156. In response to the issuance of the request to write data to database writing program 156 by user program 154, a subsequent operation is executed cyclically without waiting for completion of database writing program 156.

In control device 100 according to the present embodiment, control program 152 can behave in a manner that does not wait for completion of database writing program 156.

It seems to user program 154 that the user program is processed without waiting for completion of database writing program 156, after issuing the request to write data, as described above. Database writing program 156 is executed in the background asynchronously with the control computation executed with the control cycle. Such asynchronous and background execution enables reduction of influences on the control cycle.

Such cyclic execution is managed by scheduler program 162.

Specifically, user program 154 can only issue the request to write data for completing the cyclically executed operation, and can ensure that the cyclic execution shown in Fig. 5 is carried out with a predetermined control cycle. That is, when database writing program 156 is executed in synchronization with the control cycle, it can accept a new request to write data even when the data writing operation requested in the preceding control cycle has not been completed.

Fig. 5 shows only an example of the cyclic execution, and programs to be executed are not limited to those shown in Fig. 5, but another program may further be executed cyclically, or some of the programs shown in Fig. 5 may not be executed.

Variable reading operation 1562 aggregates data designated in advance by the sampling operation, among input values acquired by input program 164, an internal state value indicating an internal state of control program 152 or control device 100, and output values output from output program 166.

Reference record construction operation 1564 is an operation of constructing aggregated data as a reference record.

Differential record construction operation 1565 is an operation of constructing aggregated data as a differential record. The differential record includes only the data that is different based on a comparison between aggregated data acquired at the preceding time and aggregated data acquired at the current time.

Database storage operation 1566 issues a request to write data in time-series database 180. The request to write data is provided to input/output processing unit 170.

Time-series database 180 stores designated data in a time-series order, among data managed by PLC engine 150 (processing unit). Input/output processing unit 170 processes, on the fly, the request to write data from database writing program 156. Therefore, it is not necessary for database writing program 156 to wait for completion of data storage in time-series database 180 by input/output processing unit 170. That is, database writing program 156 can only issue the request to write data, for completing the operation by user program 154.

Thus, in control device 100 according to the present embodiment, database writing program 156 can behave in a manner that does not wait for completion of storage of time-series data in time-series database 180.

The amount of information may be compressed by performing preprocessing such as scaling or statistical processing on the data stored in time-series database 180 and acquired values.

Database writing program 156 itself may be prepared using the same programming tool as that for preparing user program 154. In this case, database writing program 156 may be configured as a part of user program 154, or may be configured as a program independent of user program 154. Further, a plurality of database writing programs 156 may be executed using the same processor 102.

In addition, an editing operation (addition or removal of a target variable) may be performed on database writing program 156, even during execution (cyclic execution) of control program 152 in control device 100.

The format or the form in which database writing program 156 is written is not limited to codes for writing a series of instructions, but a dedicated tool or a dedicated application for designating necessary information (for example, a list of variables to be collected or a list of operations for transforming variables) may be provided. In order to implement such a dedicated tool or a dedicated application, an interface for receiving various settings may be prepared on the control device 100 side or the support device 200 side.

Further, database writing program 156 may be implemented as a part of a system task executed in control device 100, rather than as explicit database writing program 156.

Input/output processing unit 170 stores designated time-series data in time-series database 180, in response to the request to write data from database writing program 156.

It seems to database writing program 156 that input/output processing unit 170 processes the request to write data without waiting for completion of storage of the time-series data, after issuing the request to write data, as described above. The storage of the time-series data by input/output processing unit 170 is executed in the background asynchronously with the control computation executed with the control cycle. Such asynchronous and background execution enables reduction of influences on the control cycle.

In the case where the multi-core or multi-processor configuration is adopted for processor 102, a core or processor responsible for an operation for implementing input/output processing unit 170 may be allocated separately from a core or processor that cyclically executes the control computation.

In an example of such an implementation for storing data asynchronously with the control cycle, input/output processing unit 170 may be provided with a buffer for queuing the request to write. Specifically, input/output processing unit 170 may include a buffer for receiving the request to write data and queuing the request to write data. Alternatively, a buffer that implements a similar function may be placed in data storage processing unit 184 of time-series database 180. Alternatively, such a configuration for placing buffers respectively in input/output processing unit 170 and data storage processing unit 184 may be adopted.

By adopting such a configuration, in response to issuance of the sampling request in the control computation, the subsequent operation is executed continuously without waiting for completion of the data writing.

In control device 100, output program 166, input program 164, and user program 154 (that may include a database writing program (not shown)) are executed cyclically under management of the execution timing by scheduler program 162.

Control device 100 is connected to field device group 6 (for example, an output device 61 such as actuator and an input device 62 such as sensor) through a local bus, a field bus, a field network, or the like. Control device 100 and field device group 6 connected through a local bus, a field bus, a field network, or the like have respective timers synchronized with each other, in order to implement a synchronized communication operation. Specifically, time management unit 168 of control device 100 is synchronized with a time management unit of output device 61 and/or a time management unit of input device 62.

Therefore, data assigned with time information managed by the time management unit of each device can be transmitted from output device 61 and input device 62 to control device 100, to thereby make the data consistent in time with data handled by output program 166 and input program 164 of control device 100.

Field device group 6 transmits a collected observation value for example to control device 100, together with the time information managed by the time management unit. Upon receiving the time information and the observation value from field device group 6, control device 100 stores, in time-series database 180, the time information as at least a part of a marker (Key) and the observation value as a Value.

Thus, control device 100 may be connected to a field device synchronized in time with the control device, and data stored in time-series database 180 of control device 100 may be assigned with time information on a time at which the data is collected by the field device. In this case, time-series database 180 may store a Key-Value store type record in which the time information is a Key and the value of corresponding data is a Value.

By assigning respective pieces of time information synchronized with each other and managed by time management unit 168, it is possible to synchronize time-series data with each other that are collected in time-series database 180. That is, it is possible to compare time-series data on a common time axis.

Thus, in control device 100 according to the present embodiment, respective pieces of time information synchronized with each other and managed by time management unit 168 can be used to integrate, accumulate, and analyze time-series data with a high time accuracy on control device 100 connected to one or more field devices 6.

Further, a plurality of control devices 100 can also be synchronized in time with each other and, in such a case, time-series data stored in respective time-series databases 180 of these control devices 100 can be integrated in any of these control devices 100, support device 200, or host system 400, so that even those time-series data collected from field devices 6 connected to different control devices 100 can be integrated with each other and analyzed, for example.

Such control devices 100 connected through a bus or network are synchronized in time with each other, and have a common time. Such pieces of time information synchronized in time with each other can be used for registering time-series data in respective time-series databases 180, to thereby allow the time-series data stored in respective time-series databases 180 to have a common time axis.

Control device 100 may aggregate data from another one or other multiple control devices 100 connected thereto stored in respective time-series database(s) 180 of control device(s) 100.

By implementing the data aggregation function as described above, the time-series data collected by respective control devices 100 can have a common time axis, even when these control devices 100 are distributed in order to satisfy required system specifications for example, and therefore, ex-post integration and analysis of the time-series data can be facilitated.

As described above, a plurality of control devices 100 can be connected to each other through a network or the like synchronized in time therewith, and time-series data assigned with respective time stamps synchronized in time can be collected, to perform ex-post integration and analysis of these time-series data. By adopting such a configuration, it is possible to easily implement a configuration having scalability that enables the system to be expanded depending on required performance, or the number of measurement points, for example.

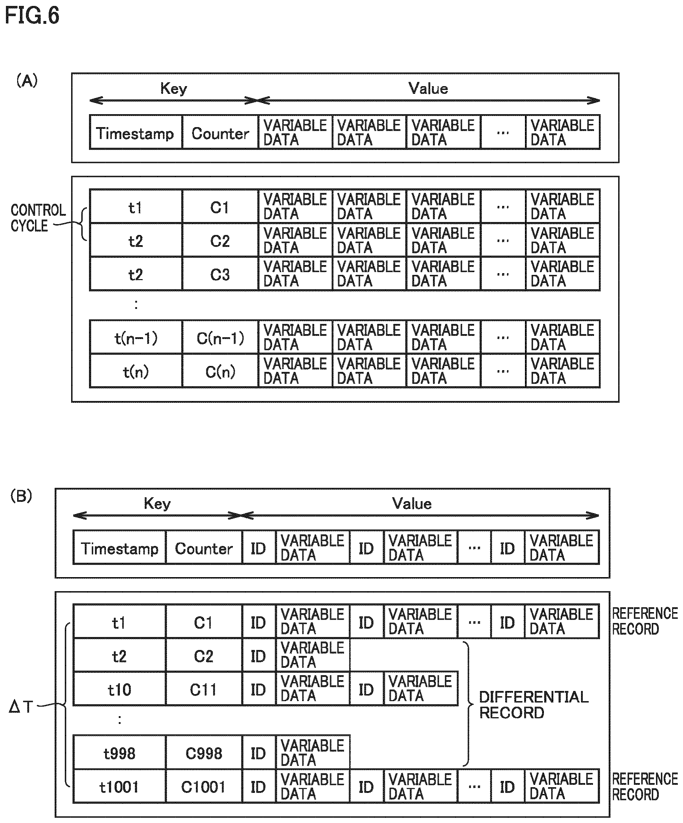

Fig. 6 is a diagram illustrating specific examples of data stored in time-series database 180 according to an embodiment and a comparative example.

Referring to Fig. 6 (A), conventional records stored in time-series database 180 are shown as a comparative example.

In the conventional record as a comparative example, all the time-series data are stored for each control cycle.

Accordingly, the data capacity of time-series database 180 tends to increase considerably.

Referring to Fig. 6 (B), records stored in time-series database 180 according to the embodiment are shown.

According to the embodiment, a case is illustrated where reference records and differential records are stored.

As reference records, data sampled at timing intervals of a predetermined cycle ΔT are stored. The differential records are stored at the same timing intervals as the control cycle shorter than predetermined cycle ΔT. Predetermined cycle ΔT can be designed as appropriate.

The differential record is constructed when there is a difference based on a comparison between data sampled at the preceding time and data sampled at the current time. Specifically, only the data that is different based on the comparison is stored as a differential record.

Specifically, a buffer for storing the data sampled at the preceding time is provided, the data stored in the buffer is compared with data sampled at the current time, and a differential record is constructed for the variable data that is different.

The variable data that is different is stored as updated data in the buffer.

The differential record can be reconstructed into the original sampled data based on the reference record.

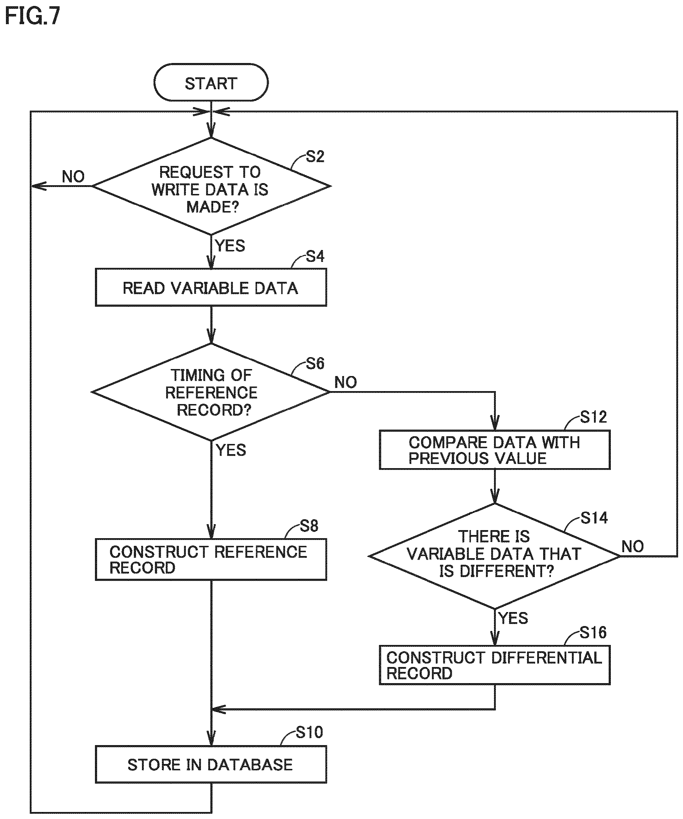

Fig. 7 is a flowchart illustrating processing of a data writing program according to an embodiment.

Referring to Fig. 7, control device 100 determines whether or not a request to write data is made (step S2).

When control device 100 determines in step S2 that a request to write data is made (YES in step S2), the control device reads variable data (step S4).

Data designated in advance is aggregated by a sampling operation.

Next, control device 100 determines whether or not it is the timing of the reference record (step S6). Specifically, it determines whether or not it is the timing of predetermined cycle ΔT.

When control device 100 determines in step S6 that it is the timing of the reference record (YES in step S6), the control device constructs a reference record (step S8).

All the sampled data are constructed as reference records.

Then, control device 100 stores the record in time-series database 180 (step S10).

Then, the process returns to step S2.

In contrast, when control device 100 determines in step S6 that it is not the timing of the reference record (NO in step S6), the control device compares data with the previous value (step S12). Specifically, a buffer for storing the data sampled at the preceding time is provided, and the data stored in the buffer is compared with the data sampled at the current time.

Next, control device 100 determines whether or not there is data that is different (step S14). Data that is different based on the result of the comparison is constructed as a differential record. The data that is different is stored as updated data in the buffer.

When control device 100 determines in step S14 that there is data that is different (YES in step S14), the control device constructs a differential record (step S16). It constructs the differential record based only on the data that is different.

Then, control device 100 stores the record in time-series database 180 (step S10).

Then, the process returns again to step S2.

In contrast, when control device 100 determines in step S14 that there is no data that is different (NO in step S14), it returns to step S2 again and repeats the above process.

Through this process, the records illustrated with reference to Fig. 6 (B) are stored.

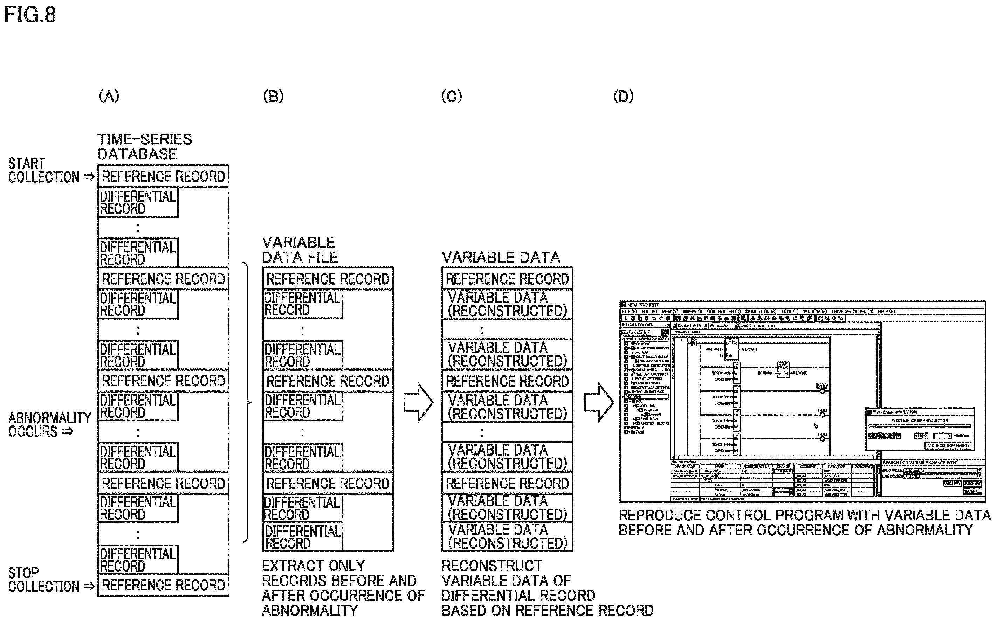

Fig. 8 is a diagram illustrating a reproduction operation in accordance with data in the time-series database based on an embodiment.

Referring to Fig. 8 (A), a case is illustrated where reference records and differential records are collected and stored in time-series database 180. Moreover, a case is illustrated where an abnormality occurs between the start and the stop of the collection.

Referring to Fig. 8 (B), a case is illustrated where only the records before and after the occurrence of the abnormality are extracted, with respect to the point of time at which the abnormality occurs.

Referring to Fig. 8 (C), a case is illustrated where variable data is reconstructed from information of the differential record based on the reference data among the extracted records. The differential record is data based on a difference from previously stored reference data, and can therefore be reconstructed based on the information.

Referring to Fig. 8 (D), a case is illustrated where the reproduction operation is executed based on the variable data reconstructed in accordance with the reference data and the differential record.

Thus, the time-series data can be visually displayed by the reproduction operation in accordance with application 210.

For extracting, in the reproduction operation, records before and after the occurrence of an abnormality with respect to the point of time at which the abnormality occurs, for example, the conventional system needs to acquire all the sampled data for reproducing data, however, the present system acquires the reference data and the differential data for reproducing data, and can therefore reduce the amount of data acquired from time-series database 180.

It should be construed that the embodiments disclosed herein are given by way of illustration in all respects, not by way of limitation. It is intended that the scope of the present disclosure is defined by claims, not by the description above, and encompasses all modifications and variations equivalent in meaning and scope to the claims.

### REFERENCE SIGNS LIST

1 control system; 2 first field bus; 4 second field bus; 6 field device group; 8 host-controller communication network; 12 remote I/O device; 14 relay group; 16, 124 I/O unit; 18 image sensor; 20 camera; 22 servo driver; 24 servo motor; 61 output device; 62 input device; 100 control device; 102 processor; 104 chipset; 106 primary storage device; 108 secondary storage device; 110 network controller; 112 USB controller; 114 memory card interface; 116 memory card; 118, 120 field bus controller; 122 local bus controller; 150 PLC engine; 152 control program; 154 user program; 156 database writing program; 158 serialization communication program; 160 system program; 162 scheduler program; 164 input program.

## Claims

1. A control device comprising:
a processing unit configured to execute a control computation cyclically with a predetermined execution cycle, the control computation including: collecting input data from a field device; calculating output data based on the input data in accordance with a predetermined user program; and outputting the calculated output data;
a database configured to store, in a time-series order, designated data among data managed by the processing unit; and
a data writing means configured to write data in the database with the same cycle as the execution cycle with which the control computation is executed cyclically, wherein
the data writing means includes:
a means configured to construct a reference record of the designated data; and
a means configured to construct a differential record of the designated data when a predetermined condition is satisfied.

2. The control device according to claim 1, wherein
the means configured to construct a reference record is configured to construct a reference record of the designated data for each first timing, and
the means configured to construct a differential record is configured to construct a differential record of the designated data for each second timing different from the first timing, when the predetermined condition is satisfied.

3. The control device according to claim 1, wherein the means configured to construct a differential record is configured to construct a differential record of the designated data when the predetermined condition: there is a difference based on a comparison between the designated data at a preceding time and the designated data at a current time, is satisfied.

4. The control device according to claim 1, wherein
the control device is connected to a field device synchronized in time with the control device, and
data stored in the database is assigned with time information on a time at which the data is collected by the field device.

5. The control device according to claim 1, wherein
a Key-Value store type record in which time information is a Key and a value of corresponding data and quality information of the data are a Value, is stored in the database.

6. The control device according to claim 1, further comprising a reproduction means configured to reproduce time-series data stored in the database, wherein
when reproducing the time-series data, the reproduction means is configured to reconstruct, based on the reference record, the differential record of corresponding data stored in the database, and output the reconstructed differential record.

7. A program for implementing a control device, the program causing a computer to perform
executing a control computation cyclically with a predetermined execution cycle, the control computation including: collecting input data from a field device; calculating output data based on the input data in accordance with a predetermined user program; and outputting the calculated output data,
the computer including a database configured to store, in a time-series order, designated data among data managed by the control computation, the program causing the computer to perform
writing data in the database with the same cycle as the execution cycle with which the control computation is executed cyclically, wherein
the writing the data includes:
constructing a reference record of the designated data; and
constructing a differential record of the designated data when a predetermined condition is satisfied.
